# EUROPEAN PATENT APPLICATION

(11) **EP 4 782 798 A1**
(43) Date of publication of application: **29.07.2026**
(21) Application number: 25207426.5
(22) Date of filing: 08.10.2025
(51) Int. Cl.: G01H 11/08, G08B 13/16

(54) **A METHOD FOR DETECTING VIBROACOUSTIC SIGNALS AND A DEVICE FOR PERFORMING THE METHOD**

(30) Priority: 27.01.2025 UA 202500330
(71) Applicant: Holodiuk, Volodymyr, 30521 Velyki Kalenychi, Khmelnytskyi region (UA); Ditskyi, Ihor, 61174 Kharkiv (UA)
(72) Inventor: Holodiuk, Volodymyr, 30521 Velyki Kalenychi, Khmelnytskyi region (UA); Ditskyi, Ihor, 61174 Kharkiv (UA)
(74) Representative: AOMB Polska Sp. z.o.o.

(57) **Abstract**

The claimed group of inventions belongs to a field of security technologies and relates to a method for detecting vibroacoustic signals and a device for performing the method in order to prevent unauthorized access.

The claimed technical solution is aimed at provision of reliable and highly effective method for detecting vibroacoustic signals, as well as a structurally simple, easy-to-manufacture and easy-to-mount device for performing the method, while providing a high level of operational reliability of the security system and significantly reducing the probability of generation of false alarm signals by providing successive processing and analysis of a vibroacoustic signal, further classifying a nature of a reason of occurrence of the vibroacoustic signal, thereby allowing to timely detect and evaluate characteristic signals as signs of a possible unauthorized access, while distracting those signals which are not intrusion signs.

## Description

### FIELD OF THE INVENTION

The claimed group of inventions belongs to a field of security technologies and relates to a method for detecting vibroacoustic signals and a device for performing the method in order to prevent unauthorized access.

### PRIOR ART

Security technologies widely utilize devices, systems, and methods that ensure protection of rooms against any unauthorized access and physical influence attempts. Among them, there are widespread solutions that are capable of detecting an external influence on enclosing structures such as walls, doors or windows. These security systems are based on use of various types of sensors, particularly vibration and acoustic sensors that register changes in physical properties of an object upon application of any force thereto.

These systems are widely used not only to protect buildings, but also to ensure security of high-risk objects. Particularly, they are mounted in safety lockers in order to detect break attempts, in ATMs for protection against unauthorized manipulations, and in containers that are used for transportation of valuable goods. In these containers, the sensors register any attempts to influence a housing during transportation, thereby allowing to take measures to protect the cargo immediately.

Main components of these security systems are sensors, controllers, signal amplifiers, and dedicated data processing software. Most of existing solutions implements principles of signal filtration and amplification in order to ensure a clear differentiation between natural oscillations and potentially dangerous influences. However, traditional methods for detecting vibroacoustic signals usually have a number of restrictions, including, *inter alia,* sensitivity to background noises, limited range of influences being detected, and insufficient accuracy of identification of an intrusion type.

Patent EP0664531B1 dated March 1, 2000, discloses a device with an intrusion detection sound system, the device comprises a structure-borne sound microphone that has a piezoelectric sensor for perceiving structure-borne sound vibrations and for converting them into electrical signals, connected to an electronic processing unit, wherein the piezoelectric sensor contains a defined vibrating bar which is formed by a bimorph element and attached at one of its ends with a part of its surface on a bottom part by means of hybrid technology to a conductive carrier. This device may serve as a basis for providing a method that is performed by receiving a signal from the piezoelectric sensor, amplifying this signal, filtrating within a given frequency range, further integrating to accumulate information about a change of the signal, comparing the obtained properties to threshold values in the electronic unit, and detecting potential violations based on analysis of this data. Drawbacks of this technical solution include dependency of the sensor sensitivity on mechanical properties of its mounting, particularly on a way how the housing is secured on the surface and a degree of gluing of the piezoelectric sensor that results in operational instability. The signal processing unit is based on a traditional amplification, filtration, and integration scheme, thereby limiting its ability to process complex and dynamic signals. The signal integration is implemented only on a single capacitor, thereby making the device sensitive to small oscillations of the signal and resulting in overload and irregular reaction of the system. Also, the device is sensitive to external noises and vibrations, thereby creating a risk of false activations in complex operational conditions. In general, this structure restricts its accuracy and stability in case of long-term usage.

Patent DE2852664C2 dated August 19, 1982, discloses a device and a method for detecting an intrusion, wherein signals generated by a structural sound sensor secured to a surface under protection are mixed with a carrier frequency after frequency-selective amplification. This frequency periodically and continuously changes within a certain range during a predefined time period. The mixed signals are filtered within a narrow frequency range, and then, the filtered signals are converted into another physical parameter and integrated. The integrated signal will be reset to zero, if the time period between two consecutive signals exceeds a specific value that is not greater than a period of one frequency sweep. An alarm signal will be provided, when the integrated signal reaches a predefined threshold value within time specified for the reset. Drawbacks of this technical solution include use of the carrier signal that is changeable in frequency, thereby complicating the structure as well as requiring high stability and narrowband filtration. The limited ability of the method to adapt to changes in parameters of the signal affects accuracy of the analysis and reduces efficiency of its use in conditions of alterable environment.

Also, the prior art includes CN114448385A dated May 6, 2022, that discloses an anti-shock saturation vibration signal processing circuit that comprises, connected successively, a unit for converting a differential input signal into voltage, a band filter unit, an integration unit, an effective value conversion unit, and a 4.0-20.0 mA conversion unit, as well as a power supply that is connected to all the above-mentioned units. The 4.0-20.0 mA conversion unit is used to output a current signal of vibration rate of 4.0-20.0 mA, and when the sensor outputs a greater component of the shock signal, the output signal is unsaturated, thereby ensuring detection of the vibration signal component. This device may serve as a basis for performing a method that comprises steps of sequential converting an input differential signal into voltage, filtrating within a given frequency range in order to extract relevant components, integrating the signal in order to obtain its accumulated properties, converting the integrated signal into its effective value, as well as transmitting a result via a 4.0-20.0 current loop for further analysis. Drawbacks of this technical solution include use of the band filter that is set to frequencies that are peculiar to shocks that does not ensure accurate elimination of non-relevant signals, thereby resulting in overload of an input cascade and loss of important data. The conversion of the integrated signal into the direct current voltage limits accuracy and flexibility of further processing. The transmission of the signal through the interface of the 4.0-20.0 current loop limits analysis speed and elaboration. If analysis and filtration tasks are assigned to a third-party system, this will complicate the integration into complex solutions and pose additional requirements as to compatibility and performance of external computational resources, thereby reducing the overall efficiency of the system.

Patent RU2254613C1 dated June 20, 2005, is taken as the closest analog, and this patent discloses a device having a converter of oscillations of controlled objects into an electric signal that is made in a form of a piezoelectric element mounted on a controlled object, an amplifier, low and high-frequency filters, first and second amplitude detectors, first and second integrators, first and second comparators with adjustable activation thresholds, a unit for determining temporal characteristics of the signals, an alarm message generation unit. This device may serve as a basis for providing a method comprising steps of converting oscillations of controlled objects into an electrical signal by means of a piezoelectric element mounted on an object, further amplification of this signal, filtrating within ranges of low and high frequencies, amplitude detection of signals within two separate channels, their integration so as to enable accumulation of characteristics of the signal, comparing an obtained data to given threshold values by means of comparators, and determining temporal characteristics of the signals and generating an alarm signal, if characteristics that exceed the given threshold values are detected.

A drawback of this technical solution lies in a limited functionality that is caused by the two-channel approach, where the high and low-frequency signals are processed separately, thereby resulting in additional difficulties in ensuring their consistency. Simplicity of logics of multiplication and calculation of the signals limits the system's abilities for accurate analysis of complex vibroacoustic parameters. Processing of strong signals without any possibility of effective scaling results in oversaturation of input cascades and distortion of data. Furthermore, analysis of the integrated signals remains too simplified, thereby negatively affecting the device's accuracy and adaptivity in complex and dynamic environmental conditions.

Therefore, there is a need in improvement of methods and devices for detecting vibroacoustic signals that could ensure operational reliability and accuracy, as well as could reduce a probability of false activations and ensure effective processing of complex signals.

### SUMMARY OF THE INVENTION

An objective underlying the claimed group of inventions is to provide a reliable and highly efficient method for detecting vibroacoustic signals as well as structurally simple, easy-to-manufacture, and easy-to-mount device for performing the method, that could allow achievement of a technical effect that lies in ensuring a high degree of operational reliability of a security system and in a significant reduction of a probability of generation of false alarm signals that is achieved by providing successive processing and analysis of a vibroacoustic signal, further classifying a nature of a reason of occurrence of the vibroacoustic signal, thereby allowing to timely detect and evaluate characteristic signals as signs of a possible unauthorized access, while distracting those signals which are not intrusion signs.

Said objective is achieved by providing a method for detecting vibroacoustic signals that comprises successive processing of a signal received from a piezoelectric sensor.

Firstly, an input vibroacoustic signal is received from the piezoelectric sensor and transmitted to a preamplifier. Amplification of the signal at this step is necessary to convert a charge signal from the piezoelectric sensor into a voltage signal. This arrangement allows to minimize losses of information and to ensure sensitivity to minor changes in vibroacoustic characteristics, thereby allowing to detect even small oscillations.

The pre-amplified signal is filtered by its successive passing through a low-frequency filter and a high-frequency filter between 5.0 kHz and 30.0 kHz. Selection of this particular frequency range is caused by results of preliminary studies that have demonstrated that the vibroacoustic signals within this spectrum most frequently comprise informative components associated with operation of mechanical systems such as rotational movements, vibrations, one-time or successive bumps or shocks. Lower frequencies appeared to be unsuitable due to domination of a low-frequency noise caused by background man-made impacts, while higher frequencies were accompanied by significant attenuation, thereby complicating their reliable analysis. Therefore, use of this frequency range ensures an optimal balance between sensitivity, accuracy and reliability of detection of intrusion signs.

The filtered signal is amplified and fed to a comparator to which a reference voltage source is connected. A level of the amplified filtered signal is compared to a time-constant value in the comparator, and a command for transmitting the amplified signal through an analog switch to a rectifier is generated, or if the level of the amplified signal exceeds the time-constant value, then the command for transmitting the amplified signal through the analog switch to the rectifier is generated and, at the same time, a command to an integrator about introducing an amplitude increase coefficient of an signal inputted to the integrator is generated. This arrangement ensures correction of signal processing in cases, when the amplified signal exceeds the time-constant value and approaching to a lower limit of a bipolar signal. In view of this particular reason, instead of transmission of the amplified signal to the rectifier, the filtered signal having a sufficient amplitude and requires no additional amplification is transmitted. At the same time, the integrator receives a command for correcting its parameters in order to avoid any excessive reduction of its input characteristics.

The signal is rectified in the rectifier, while converting it into a unipolar signal, thereby simplifying its further processing.

The unipolar signal is integrated by means of the integrator. This allows to perform a function of accumulating the input signal in temporal dimension. This process can be described as calculation of an integral of the signal that is fed to the integrator, the integral mathematically reflects an overall value of signal influence in course of time. As a result, the level of the signal at the integrator output is proportional to an area under plot of the signal inputted to the integrator. This means that the input signal from the integrator reflects the overall influence of the signal inputted to the integrator with consideration of its duration and amplitude. The longer the signal resides at the integrator input and the greater its amplitude, the more intensively the output signal level increases. Tests have demonstrated that integration is an effective methodology to detect slow changes in the signal that may be associated with changes of a vibroacoustic environment. This particular approach allows to consider not only one-time impulses or short-time influences, but also to accumulate information about long-term or significant changes of the vibroacoustic signals. This is important for detection of gradually developing events such as changes of vibration characteristics. The integration also performs the function of filtration, e.g., short impulses having no significant influence on the common signal, accumulate small area under the plot, and do not cause any significant increase of the output signal.

After the integrated signal reached the power supply voltage level greater than 80.0%, it is subjected to frequency modulation by feeding the signal from the integrator to an impulse generation unit. A stable duration impulse is generated and fed to a microcontroller. This allows to fix a moment of significant changes within the environment being analyzed. At the same time, a command for resetting the integrator is generated, thereby allowing to prepare the system for the next processing cycle. The power supply voltage is a voltage that supplies power to the entire signal processing circuit and its rated value is 3.3 V.

Repetition periods of the stable duration impulses are measured by means of the microcontroller and accumulated in a data buffer, and a minimum interval between the stable duration impulses is determined in the microcontroller. The repetition periods of the stable duration impulses represent time between individual impulses being indicative of a change rate of the signal frequency.

After the data buffer is filled with at least 30 values of the repetition periods of the stable duration impulses, the data from the data buffer is transmitted to a monotonicity coefficient calculation unit. Inventors have performed tests that have demonstrated that this minimum number of values is optimal to ensure calculation accuracy without any significant increase of the processing time. In this context, the sensitivity is a number of values of periods that must be accumulated in the buffer before start of the monotonicity coefficient calculation. A specific feature of the solution is a possibility to adjust the sensitivity, i.e., setting the required number of necessary values considered to be sufficient for filling the data buffer. The sensitivity adjustment allows to optimize the operation depending on specific requirements, e.g., in situations, where a response rate is crucial, to reduce a volume of the buffer, while to increase it, when the accuracy is of higher priority. This flexibility allows to operate effectively within a wide range of conditions with various levels of background vibroacoustic signals. Therefore, the sensitivity in the present method not only defines the amount of data required to start the monotonicity coefficient calculation, but also may be adjusted as per specific usage requirements, which makes it versatile and adaptive.

The monotonicity coefficient is determined as a ratio between an average value of the repetition periods of the stable duration impulses and a minimum value of the measured period. This allows to evaluate regularity and uniformity of the vibroacoustic signal received from the piezoelectric sensor. The average value of the impulse repetition periods is calculated as a mean arithmetic value of durations of all the impulses accumulated in the data buffer. This ensures a generalized signal change characteristic within a given period of time. The minimum value of the measured period is indicative of the most rapid signal changes, since it indicates a maximum high frequency or amplitude of the incoming vibroacoustic signals.

The monotonicity coefficient and the minimum interval between the stable duration impulses are transmitted to a decision-making unit, where an alarm signal is generated after the monotonicity coefficient has reached the value of greater than 3.0 and the minimum interval between the stable duration impulses has fallen within 30.0-2000.0 µs. The decision-making unit analyses the calculated parameters to determine whether there is any unauthorized access by registering external influences. This unit ensures analysis of key parameters such as the monotonicity coefficient and the minimum interval between the stable duration impulses in order to identify potentially dangerous situations.

In the course of the tests, it has been found that the calculation of the monotonicity coefficient allows to obtain a more informative and sensitive parameter of the characteristics of the vibroacoustic signal, rather than direct comparison of individual parameters of the signal such as amplitude or frequency. Due to consideration of these parameters, this method allows to evaluate not only the current state, but also tendencies towards changes, e.g., a progressing instability.

Table shows results of a series of tests conducted by inventors for determining threshold values for generation of the alarm signal. Test conditions included various scenarios directed both at imitation of random background noises and intentional external influences. To this end, influences associated with natural vibrations, shocks, movements, and other actions that could arise in the course of the unauthorized access attempt were modeled.

Random background noises arise due to natural or unexpected events that are not associated with purposive actions aimed at security violation. These influences include natural vibrations that may arise due to operation of equipment or transport, acoustic environmental noises caused by wind, rain or random shocks, as well as chaotic actions, e.g., animal movements or falling items. These influences usually have a chaotic nature, thereby allowing to identify them as non-dangerous.

Intentional external influences are results of purposive actions that may include surface shocks, movements of objects within sensitivity area, movement of the object itself or high-intensity oscillation which are caused by attempts of intrusion or access violation. These influences are characterized by regularity, clear signal structure, and high monotonicity coefficient, thereby allowing the decision-making unit to identify them as unauthorized access and generate the alarm signal.

The conducted tests have demonstrated that certain influence scenarios have similar characteristics and results. For this particular reason, the tests have been structured according to groups of influences that reflect different types of the external influence. With consideration of similarity of the characteristics and in order to enhance clarity of the analysis, the results have been averaged for each group of influences. These groups include: operation of technical equipment, falling objects, movement or shaking of structures located near the device, and regular actions.

The group of operation of technical equipment included scenarios related to use of technical equipment within the object boundaries or nearby, in particular, influences from operation of generators, ventilation systems, refrigerating equipment, drilling machines, road machinery, and electrical tools. The group of falling objects included scenarios related to falling boxes, tools, dishes or small metal items on a floor. The group of movement or shaking of large structures included scenarios related to displacement or shaking of objects located near the device, e.g., stacks, cabinets, metal frames located near the device. The groups of regular actions included scenarios related to shocks by hammer, digging bar, cutting by thermal lance.

**Table - Test results**

| Influence | Minimum interval between the stable duration impulses, µs | Monotonicity coefficient |
|---|---|---|
| Operation of technical equipment | 25.0 | 4.2 |
| Falling objects | 750.0 | 2.1 |
| Movement or shaking of the structures | 2700.0 | 3.1 |
| Regular actions | 450.0 | 3.33 |

As seen from the Table, in various scenarios, different values of monotonicity coefficient and minimum interval between the stable duration impulses are observed, and it characterizes the nature of the signal for each group of influences. In the first group of influences that is related to the operation of technical equipment, the signal has a high-frequency nature with short impulses of a chaotic nature. In the second group of influences that is related to falling objects, the signal is characterized by random impulses that arise irregularly, depending on the frequency of these falls. In the third group of influences that arise due to movement or shaking of structures, the signal has a low-frequency nature with long impulses that are caused by movement inertia of large objects. In the fourth group of inventions related to regular actions such as hammer shocks or cutting, the signal has clearly defined regularity, where each impulse corresponds to an individual action that reflects a repetitive nature of the influences.

Thus, the tests have allowed to determine threshold values, i.e., conditions at which the decision-making unit will generate the alarm signal. If the monotonicity coefficient value is greater than 3.0, while the minimum interval between the stable duration impulses is within 30.0-2000.0 µs, the alarm signal will be generated. These particular criteria ensure high level of operation reliability of the security system, as well as minimize a probability of generation of false alarm signals, since they eliminate influences that are not signs of intrusion.

In a possible exemplary embodiment of the invention, the reference voltage value multiplied by a reduction factor being, preferably, 0.08 is a time-constant value. The reference voltage is a reference voltage value to which the amplified signal is compared. Its voltage is defined as a fraction of the rated power supply voltage of the circuit. This approach allows to ensure stable operation by adapting it to different power supply levels.

According to a further possible exemplary embodiment of the invention, the amplitude increase coefficient of the signal inputted to the integrator is 20.0-25.0. This arrangement allows to consider the change of the signal amplitude, when the time-constant value is exceeded.

According to a further possible exemplary embodiment of the invention, the microcontroller is configured to generate a command for calculating the monotonicity coefficient every 5.0 ms, while resetting the previously calculated monotonicity coefficient. This arrangement ensures high operativity and accuracy of the analysis of the vibroacoustic signals. The interval of 5.0 ms has been chosen based on tests conducted by the inventors that have demonstrated that this time period is optimal to ensure a balance between the analysis rate and signal processing. The reset of the preliminarily calculated monotonicity coefficient after each calculation cycle avoids any accumulation of errors and influence of the accumulated data on the current analysis results which is important to ensure data relevance. This approach increases sensitivity and allows to generate the alarm signal timely in case any deviations are detected.

In order to implement said method, a device is provided, the device comprises a housing with the piezoelectric sensor arranged therein, an output of the piezoelectric sensor is connected to a printed circuit board. The preamplifier is arranged on the printed circuit board, an input of the preamplifier is connected to an input of the low-frequency filter, and an output of the low-frequency filter is connected to the high-frequency filter. An output of the low-frequency filter is connected to the amplifier and to a first input of the analog switch. An output of the amplifier is connected to a first input of the comparator and to a second input of the analog switch. A reference voltage source is connected to a second input of the comparator, the reference voltage source is configured to set a comparator switching limit. An output of the comparator is connected to the analog switch, an output of the analog switch is connected to the rectifier, an output of the rectifier is connected to an input of the integrator, an output of the integrator is connected to the impulse generation unit that is configured to generate a command for resetting the integrator. The impulse generation unit has two outputs, one output is connected to the integrator, while another output is connected to an input of the microcontroller, while the data buffer, the monotonicity coefficient calculation unit, and the decision-making unit are configured within the microcontroller.

According to a possible exemplary embodiment of the invention, a down converter is arranged on the printed circuit board, the down converter is configured to supply power to all the elements and units. This arrangement ensures energy efficiency and operation stability, decreases input voltage down to a required level with minimum energy losses.

According to a possible exemplary embodiment of the invention, a timer is implemented in the microcontroller, the timer is configured as a digital period meter based on a core-independent periphery. This arrangement ensures high accuracy and measurement rate of time intervals, while reducing the microcontroller load, thereby allowing to optimize processing of the signals and ensure energy efficiency of the device operation.

According to a further possible exemplary embodiment of the invention, the low-frequency filter is configured to limit the frequencies lower than 5.0 kHz.

According to a possible exemplary embodiment of the invention, the high-frequency filter is configured to limit the frequencies higher than 30.0 kHz.

### BRIEF DESCRIPTION OF THE DRAWINGS

In order to provide a more complete understanding of the claimed group of inventions and advantages thereof, the following description provides an explanation of a possible implementation thereof with a reference to figures of the appended drawings, wherein identical designations denote identical parts, and which illustrate the following:
Fig. 1 shows a flow chart of a preferable embodiment of a method for detecting vibroacoustic signals according to claim 1,
Fig. 2 shows a flow chart of an embodiment of a method for detecting vibroacoustic signals according to claim 4,
Fig. 3

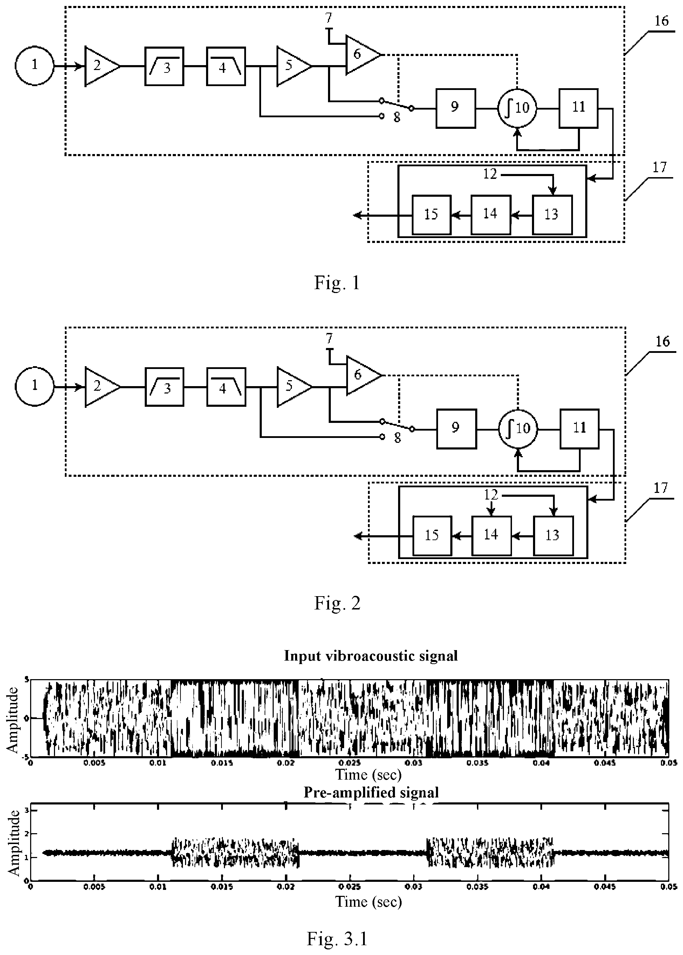

(Fig. 3.1 - Fig. 3.3) shows images of processing of the detected vibroacoustic signal,

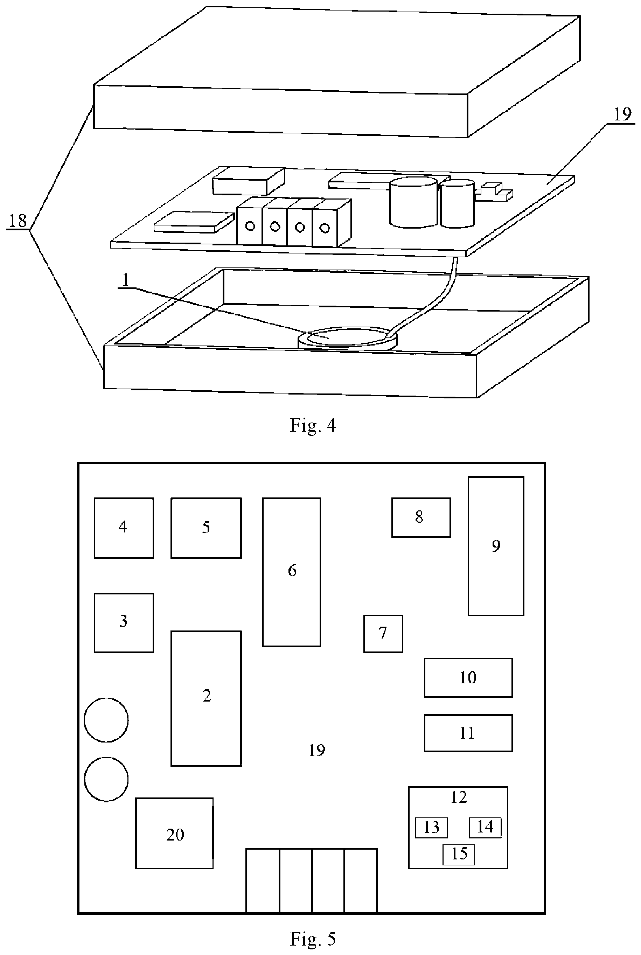

Fig. 4 shows a general view of the device according to claim 5,
Fig. 5 shows a schematic view of the printed circuit board and elements mounted thereon.

### Main designations:

| | |
|---|---|
| 1. | piezoelectric sensor, |
| 2. | preamplifier, |
| 3. | low frequency filter, |
| 4. | high frequency filter, |
| 5. | amplifier, |
| 6. | comparator, |
| 7. | reference voltage source, |
| 8. | analog switch, |
| 9. | rectifier, |
| 10. | integrator, |
| 11. | impulse generation unit, |
| 12. | microcontroller, |
| 13. | data buffer, |
| 14. | monotonicity coefficient calculation unit, |
| 15. | decision-making unit, |
| 16. | hardware processing, |
| 17. | digital processing, |
| 18. | housing, |
| 19. | printed circuit board, |
| 20. | down converter. |

The illustrative drawings that explain the claimed group of inventions as well as the mentioned particular exemplary embodiments are in no way intended to limit the scope of rights appended hereto but to explain the essence of the group of inventions.

### IMPLEMENTATION POSSIBILITY

Fig. 1 shows a flow chart of a preferable embodiment of a method for detecting vibroacoustic signals according to claim 1, according to which, a vibroacoustic signal received from a piezoelectric sensor (1) is transmitted to a preamplifier (2) that is built based on a charge amplifier circuit, where a charge signal of the piezoelectric sensor (1) is converted into a corresponding voltage level within a range of 0-3.3 V for further processing. The pre-amplified signal is filtered by successive passing through a low-frequency filter (3) and a high-frequency filter (4) that limit a frequency range of the pre-amplified signal within 5.0-30.0 kHz. After the filtration is completed, the filtered signal is fed to a converter (5), where it is further amplified and fed to a comparator (6) to which a reference voltage source (7) is connected.

A level of the amplified signal is compared to a time-constant value in the comparator (6), the time-constant value is a reference voltage value multiplied by a reduction factor that is, preferably, 0.08, i.e., the reference voltage is preliminarily reduced down to the level of 8% of its initial value. At the same time, the reference voltage value is a product of the power supply voltage of 3.3 V and the factor of 0.365. For the rated value of the power supply voltage, the reference voltage is about 1.21 V, i.e., 36.5% of the power supply rated voltage. In order to obtain the time-constant value, the reference voltage is multiplied by the reduction factor of 0.08 and is approximately 0.0964-0.0968 V. This arrangement allows to adapt a sensitivity threshold of the comparator (6) to the signal fed thereto, thereby ensuring correct reacting to negative half-waves of high-level bipolar signals.

If the amplified signal level is not greater than the time-constant value, then the amplified signal is fed through an analog switch (8) to a rectifier (9).

If the level of the amplified signal exceeds the time-constant value, a command to transmit the filtered signal through the analog switch (8) to the rectifier (9) is generated and, at the same time, a command to introduce an amplitude increase coefficient of an integrator (10) input signal to the integrator (10) is generated. The amplitude increase coefficient of the signal inputted to the integrator (10) is 20.0-25.0.

The signal is rectified in the rectifier (9) and converted into a unipolar signal, and it is transmitted to the integrator (10), where it is subjected to integration. After the integrated signal reached the power supply voltage level greater than 80.0%, while the rated power supply voltage is 3.3 V, the integrated signal is fed to an impulse generation unit (11). The impulse generation unit (11) generates a stable duration impulse and simultaneously feeds a command to reset the integrator (10), thereby ensuring that it is ready for a repeated cycle of integration.

The stable duration impulses are transmitted to a microcontroller (12) that measures repetition periods of these impulses. Obtained values are accumulated in a data buffer (13). After the data buffer (13) is filled with at least 30 values of the repetition periods of the stable duration impulses, the data from the data buffer (13) will be transmitted to a monotonicity coefficient calculation unit (14), where a monotonicity coefficient is determined as a ratio between an average value of the periods of the stable duration impulses and a minimum value of the measured period.

An occupancy of the data buffer (13), i.e., its volume, is defined by a set sensitivity of the device according to claim 3. If the sensitivity is set to a high level, then the volume of the data buffer (13) will be 450 values of the repetition periods of the stable duration impulses and, depending on the influence, it will be filled during a certain time and start analysis. If the sensitivity is set to a low level, then the volume of the data buffer (13) will increase to 900 values of the repetition periods of the stable duration impulses, its filling will require twice as much time at the same influence, thereby allowing to accumulate more data, but requiring more time for filling.

The determined monotonicity coefficient together with the minimum interval between the impulses is transmitted to a decision-making unit (15). In the decision-making unit (15), an alarm signal is generated, when the monotonicity coefficient becomes greater than 3.0 and the minimum interval between the stable duration impulses is within 30.0-2000.0 µs.

If the minimum interval between the stable duration impulses is 25.0 µs that is not within the range of 30.0-2000.0 µs, although the monotonicity coefficient is 4.2, i.e., it is greater than the threshold value of 3.0, the alarm signal will not be generated. If the minimum interval is 750.0 µs that is also within the acceptable range, but the monotonicity coefficient is 2.1, i.e., it is lower than the threshold value, the alarm signal will not be generated. Similarly, if the minimum interval between the impulses is 2700.0 µs that is not within 30.0-2000.0 µs, and the monotonicity coefficient is 3.1, i.e., is it greater than the threshold value of 3.0, the alarm signal will not be generated as well. If the minimum interval between the stable duration impulses is 450.0 µs that is within the range of 30.0-2000.0 µs, and the monotonicity coefficient is 3.33, i.e., it is greater than the threshold value of 3.0, the alarm signal will be generated.

The method for detecting vibroacoustic signals consists of two stages being hardware processing (16) and digital processing (17).

The hardware processing (16) includes amplification of the signal on the preamplifier (2), filtration through the low-frequency filter (3) and the high-frequency filter (4), additional amplification at the amplifier (5), comparison of the signal to the reference voltage source (7) by means of the comparator (6), transmission of the filtered or amplified signal through the analog switch (8) to the rectifier (9), where the signal is rectified, then the signal is integrated in the integrator (10), and the integrated signal is fed to the impulse generation unit (11).

The digital processing (17) is implemented in the microcontroller (12), wherein the data buffer (13), the monotonicity coefficient calculation unit (14), and the decision-making unit (15) are configured. The digital processing (17) consists of steps of measuring the impulse repetition periods by means of the microcontroller (12), accumulating the data in the buffer (13), calculating the monotonicity coefficient in the monotonicity coefficient calculation unit (14), and transmitting the obtained parameters to the decision-making unit (15) that evaluates them according to given criteria and generates the alarm signal if the threshold values are exceeded.

Fig. 2 shows a flow chart of a preferable embodiment of the method for detecting vibroacoustic signals, wherein the microcontroller (12) is equipped with software that is configured to generate a command to calculate the monotonicity coefficient every 5.0 ms, while resetting the previously calculated monotonicity coefficient.

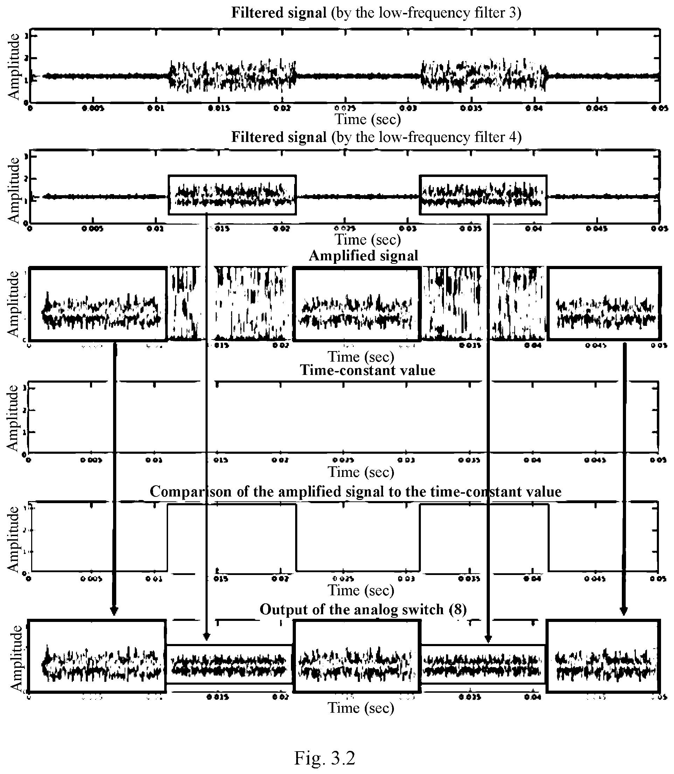

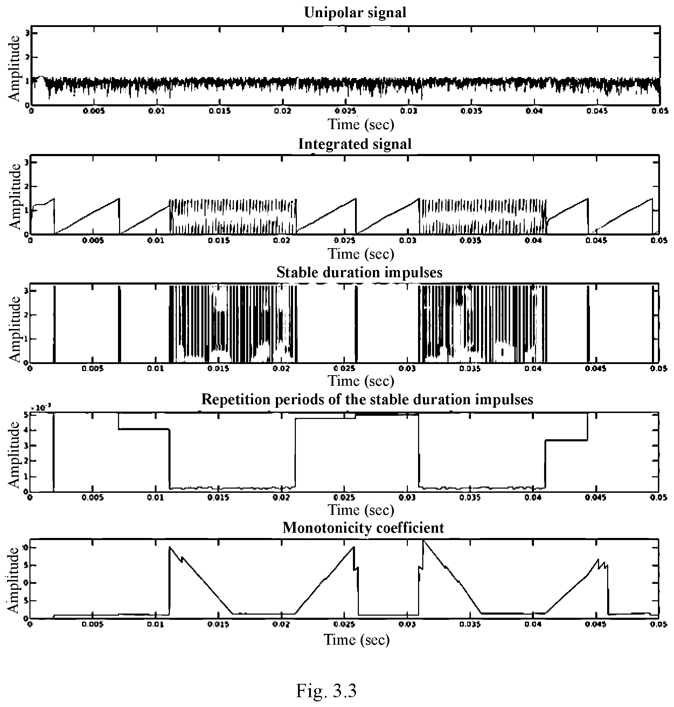

Fig. 3.1, Fig. 3.2, and Fig. 3.3 are parts of a single drawing of Fig. 3 that shows images of processing of the detected vibroacoustic signal. Due to the large volume of data and the required detailed image of the signal processing, the drawing is divided into three parts.

Fig. 3.1 shows a starting part of the processing of the detected vibroacoustic signal and comprises:
a plot of an input vibroacoustic signal received from the piezoelectric sensor (1);
a plot of the preliminarily amplified signal after the preamplifier (2) that converts the charge signal of the piezoelectric sensor (1) into a voltage signal, the plot clearly shows predominantly weak signal with two strongly evident fragments of higher amplitude that may represent shocks of a rotary hammer at the background of a weak drilling signal.

Fig. 3.2 shows a subsequent part of the processing of the detected vibroacoustic signal and comprises:
plots of the filtered signal after the low frequency filter (3) and the high frequency filter (4);
a plot of the amplified signal after the amplifier (5);
a plot of the time-constant value which the comparator (6) compares the amplified signal to;
a plot that shows a process of comparing the amplified signal to the time-constant value. Since it is a binary signal with two strongly evident fragments of higher amplitude, it may be divided into two states, i.e., high and low states. The high state will be established, when the negative half-wave of the amplified signal, from the time-constant value to zero, reaches or exceeds the time-constant value. In other cases, the low state will be established, i.e., the amplified signal does not exceed the time-constant value. Also, this signal has hysteresis, i.e., a small delay before switching, in order to eliminate constant rapid switches in transition modes;
a plot of the analog switch (8) output, the plot shows which signal is transmitted to the rectifier (9), if the amplified signal during comparison in the comparator (6) is in the low state, then the amplified signal will be transmitted to the rectifier (9), if the amplified signal is in the high state, then the filtered signal is transmitted to the rectifier (9).

In order to provide better understanding and clarity, Fig. 3.2 illustrates, with rectangles and arrows, which particular signal, i.e., the filtered or the amplified one, is transmitted through the analog switch (8) to the rectifier (9) after comparison in the comparator (6). This allows to clearly differentiate which type of the signal passes to the next processing step at the corresponding moment.

Fig. 3.3 shows processing of the detected vibroacoustic signal and comprises:
a plot of the unipolar signal after the rectifier (9), where a positive half-wave, from the time-constant to the upper limit of the amplified signal or the filtered signal, is mirrored relative to the time-constant value downwards;
a plot of the integrated signal after the integrator (10), where it is accumulated, as a function of the intensity of the integrated signal, and the command to reset the integrator (10) is generated after the power supply voltage level of above 80.0% is reached;
a plot of the stable duration impulses after the impulse generation unit (11) that shows the stable duration impulse each time when the integrator (10) is reset;
a plot of repetition periods of the stable duration impulses measured by the microcontroller (12);
a plot of the monotonicity coefficient calculation as defined by the monotonicity coefficient calculation unit (14) that shows its value for various time segments.

Fig. 4 shows a general view of the device that operates according to one of the charts shown in Fig. 1 or Fig. 2 and that is a separate module mountable in various housings depending on usage conditions. This illustrative material is used merely as an illustration of one of exemplary embodiments of the group of inventions and in no way limits the scope of rights presented in the claims. It shall be understood that the device may be implemented in various structural arrangements, e.g., it may be integrated into junction boxes or specialized mounting modules.

The device comprises a housing (18), where the piezoelectric sensor (1) is arranged, and the output of the piezoelectric sensor is connected to a printed circuit board (19).

Fig. 5 shows a schematic view of the printed circuit board (19) with the following components arranged thereon: the amplifier (2), the low-frequency filter (3), the high-frequency filter (4), the amplifier (5), the analog switch (8), the comparator (6) which the reference voltage source (7) is connected to, the rectifier (9), the integrator (10) with its output connected to the input of the impulse generation unit (11), the impulse generation unit (11), and the microcontroller (12). The data buffer (13), the monotonicity coefficient calculation unit (14), and the decision-making unit (15) are configured in the microcontroller (12). Therewith, the printed circuit board (19) and the microcontroller (12) may be arranged using known elements. A timer (not shown in the drawings) is implemented in the microcontroller (12), the timer is configured as a digital period meter based on a core-independent periphery. For example, in one of a possible exemplary embodiments of the group of inventions, the inventors have used a microcontroller by STMicroelectronics, model STM32L081CZU6. It should be understood that any other microcontrollers provided by any other manufacturers, as well as embodiments of configurations of the printed circuit board arrangement, may be embodied without falling beyond the principles of the present group of inventions.

A down converter (20) is arranged on the printed circuit board (19), the down converter is configured to supply power to all the elements and units, and the down converter (20) may be connected to an external power source such as an alternating current network, a battery, a solar panel or another energy source that is capable of providing the required voltage. The printed circuit board (19) is further equipped with terminals (not shown in the drawings), contacts of the terminals are connected to the down converter (20) and to the microcontroller (12) which are configured to supply power, to connect to other elements, and to transmit the alarm signal.

It should be understood that the above-described embodiments of the group of inventions must be used merely as an illustration and shall not limit the scope thereof. Obvious modifications of embodiments of the group of inventions may be easily made by persons skilled in this field of art without going beyond the essence thereof.

Therefore, the claimed group of inventions ensures high level of operation reliability of the security system and significantly reduces the probability of generation of false alarm signals that is achieved by providing successive processing and analysis of the vibroacoustic signal, subsequent classification of the nature of occurrence of the vibroacoustic signal, thereby allowing to timely detect and evaluate the characteristic signals as signs of possible unauthorized access, while distracting those signals which are not intrusion signs.

## Claims

1. A method for detecting vibroacoustic signals, the method comprising:
receiving an input vibroacoustic signal from a piezoelectric sensor and transmitting it to a preamplifier,
filtering a pre-amplified signal by its successive passing through a low-frequency filter and a high-frequency filter between 5.0 kHz and 30.0 kHz,
amplifying a filtered signal and feeding it to a comparator to which a reference voltage source is connected,
comparing a level of the amplified signal to a time-constant value in the comparator and generating a command for transmitting the amplified signal through an analog switch to a rectifier, or if the level of the amplified signal exceeds the time-constant value, then generating the command for transmitting the amplified signal through the analog switch to the rectifier and, at the same time, generating a command to an integrator about introducing an amplitude increase coefficient of an integrator input signal,
rectifying the signal in the rectifier, while converting it into a unipolar signal,
integrating the unipolar signal by means of the integrator,
after the integrated signal reaches a power supply voltage level greater than 80.0%, subjecting it to frequency modulation by feeding the signal from the integrator to an impulse generation unit, generating a stable duration impulse and feeding it to the microcontroller, while at the same time generating a command for resetting the integrator,
measuring repetition periods of the stable duration impulses by means of the microcontroller and accumulating them in a data buffer, and determining a minimum interval between the stable duration impulses in the microcontroller,
after the data buffer is filled with at least 30 values of the repetition periods of the stable duration impulses, transmitting the data from the data buffer to a monotonicity coefficient calculation unit,
determining a monotonicity coefficient as a ratio between an average value of the repetition periods of the stable duration impulses and a minimum value of the measured period,
transmitting the monotonicity coefficient and the minimum interval between the stable duration impulses to a decision-making unit, and
generating an alarm signal in the decision-making unit, when the monotonicity coefficient becomes greater than 3.0 and the minimum interval between the stable duration impulses is within 30.0-2000.0 µs.

2. The method according to claim 1, **wherein** a reference voltage value multiplied by a reduction factor being, optionally 0.08 is the time-constant value.

3. The method according to claim 1 or 2, **wherein** the amplitude increase coefficient of the signal inputted to the integrator is 20.0-25.0.

4. The method according to claim 1 or 2 or 3, **wherein** the microcontroller is configured to generate a command for calculating the monotonicity coefficient every 5.0 ms, while resetting the previously calculated monotonicity coefficient.

5. A device for detecting vibroacoustic signals, the device comprising: a housing with a piezoelectric sensor arranged therein, an output of the piezoelectric sensor is connected to a printed circuit board with a preamplifier arranged thereon, an input of the preamplifier is connected to an input of a low-frequency filter, an output of the low-frequency filter is connected to a high-frequency filter, an output of the high-frequency filter is connected to an amplifier and to a first input of an analog switch, an output of the amplifier is connected to a first input of a comparator and to a second input of the analog switch, a reference voltage source is connected to a second input of the comparator, the reference voltage source is configured to set a comparator switching limit, an output of the comparator is connected to the analog switch, an output of the analog switch is connected to a rectifier, an output of the rectifier is connected to an input of an integrator, an output of the integrator is connected to an impulse generation unit that is configured to generate a command for resetting the integrator, the impulse generation unit has first and second outputs, the first output is connected to the integrator, and the second output is connected to an input of the microcontroller, while a data buffer, a monotonicity coefficient calculation unit, and a decision-making unit are configured within the microcontroller.

6. The device according to claim 5, **wherein** a down converter is arranged on the printed circuit board, and the down converter is configured to supply power to all the elements and units of the device.

7. The device according to claim 5 or 6, **wherein** a timer is implemented in the microcontroller, and the timer is configured as a digital period meter based on a core-independent periphery.

8. The device according to claim 5 or 6 or 7, **wherein** the low-frequency filter is configured to limit frequencies lower than 5.0 kHz.

9. The device according to claim 5 or 6 or 7 or 8, **wherein** the high-frequency filter is configured to limit frequencies greater than 30.0 kHz.
